# EUROPEAN PATENT APPLICATION

(11) **EP 4 633 235 A1**
(43) Date of publication of application: **15.10.2025**
(21) Application number: 23899934.6
(22) Date of filing: 05.12.2023
(51) Int. Cl.: H04W 28/06

(54) **INFORMATION TRANSMISSION METHOD, INFORMATION TRANSMISSION APPARATUS, AND COMMUNICATION DEVICE**

(30) Priority: 05.12.2022 CN 202211552417
(71) Applicant: Vivo Mobile Communication Co., Ltd., Dongguan, Guangdong 523863 (CN)
(72) Inventor: SUN, Bule, Dongguan, Guangdong 523863 (CN)
(74) Representative: Conti, Marco
(86) International application number: PCT/CN2023/136276
(87) International publication number: WO 2024/120358

(57) **Abstract**

This application discloses an information transmission method, an information transmission apparatus, and a communication device, pertaining to the field of communication technologies. The information transmission method of embodiments of this application includes: transmitting, by a terminal, first information, where the first information includes at least one of the following: parameter information of a target network layer, where the target network layer is an updated network layer in a target AI network model; and second information, where the second information is used to describe the target network layer.

## Description

### CROSS-REFERENCE TO RELATED APPLICATIONS

This application claims priority to Chinese Patent Application No. 202211552417.X filed in China on December 5, 2022, which is incorporated herein by reference in its entirety.

### TECHNICAL FIELD

This application pertains to the field of communication technologies, and specifically, relates to an information transmission method, an information transmission apparatus, and a communication device.

### BACKGROUND

In the related technologies, an artificial intelligence (Artificial Intelligence, AI) network model is separately deployed at a transmit end and a receive end in a communication network, so as to process transmission information with the help of the AI network model.

The AI network model can perform transfer learning to update the AI network model. In this case, the transmit end and the receive end in the communication network needs to synchronize an updated AI network model. The updated AI network model needs air interface-based transmission, which occupies a lot of transmission resources and reduces transmission resources available for other information in the communication network.

### SUMMARY

Embodiments of this application provide an information transmission method, an information transmission apparatus, and a communication device, which can reduce transmission resources used by a transmit end and a receive end in a communication network to synchronize an updated AI network model after transfer learning on the AI network model to update the AI network model, thereby increasing transmission resources available for other information in the communication network.

According to a first aspect, an information transmission method is provided, where the method includes:
transmitting, by a terminal, first information, where the first information includes at least one of the following:
parameter information of a target network layer, where the target network layer is an updated network layer in a target AI network model; and
second information, where the second information is used to describe the target network layer.

According to a second aspect, an information transmission apparatus is provided, applied to a terminal, where the apparatus includes:
a first transmission module, configured to transmit first information, where the first information includes at least one of the following:
parameter information of a target network layer, where the target network layer is an updated network layer in a target AI network model; and
second information, where the second information is used to describe the target network layer.

According to a third aspect, an information transmission method is provided, including:
transmitting, by a network-side device, first information, where the first information includes at least one of the following:
parameter information of a target network layer, where the target network layer is an updated network layer in a target AI network model; and
second information, where the second information is used to describe the target network layer.

According to a fourth aspect, an information transmission apparatus is provided, applied to a network-side device, where the apparatus includes:
a second transmission module, configured to transmit first information, where the first information includes at least one of the following:
parameter information of a target network layer, where the target network layer is an updated network layer in a target AI network model; and
second information, where the second information is used to describe the target network layer.

According to a fifth aspect, a communication device is provided, where the communication device includes a processor and a memory, where a program or instructions capable of running on the processor are stored in the memory, and when the program or the instructions are executed by the processor, the steps of the method according to the first aspect or the third aspect are implemented.

According to a sixth aspect, a terminal is provided, including a processor and a communication interface, where the communication interface is configured to transmit first information, where the first information includes at least one of the following:
parameter information of a target network layer, where the target network layer is an updated network layer in a target AI network model; and
second information, where the second information is used to describe the target network layer.

According to a seventh aspect, a network-side device is provided, including a processor and a communication interface, where the communication interface is configured to transmit first information, where the first information includes at least one of the following:
parameter information of a target network layer, where the target network layer is an updated network layer in a target AI network model; and
second information, where the second information is used to describe the target network layer.

According to an eighth aspect, a communication system is provided, including a terminal and a network-side device, where the terminal can be configured to execute the steps of the information transmission method according to the first aspect, and the network-side device can be configured to execute the steps of the information transmission method according to the third aspect.

According to a ninth aspect, a readable storage medium is provided, where a program or instructions are stored in the readable storage medium, and in a case that the program or the instructions are executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the method according to the first aspect or the method according to the third aspect.

According to an eleventh aspect, a computer program/program product is provided, where the computer program/program product is stored in a storage medium, and the computer program/program product is executed by at least one processor to implement the steps of the information transmission method according to the first aspect are implemented, or the computer program/program product is executed by at least one processor to implement the steps of the information transmission method according to the third aspect.

In the embodiments of this application, the terminal transmits first information, where the first information includes at least one of the following: parameter information of a target network layer, where the target network layer is an updated network layer in a target AI network model; and second information, where the second information is used to describe the target network layer. This allows the terminal to transmit only the updated network layers of the AI network model during the process of transfer learning on the AI network model to update the AI network model. Compared to transmitting the entire updated AI network model, this significantly reduces consumption of transmission resources, thereby increasing transmission resources available for the terminal to transmit other information.

### BRIEF DESCRIPTION OF DRAWINGS

FIG. 1 is a schematic architectural diagram of a wireless communication system to which embodiments of this application are applicable;
FIG. 2 is a schematic diagram of performance gains based on channel state information (Channel State Information, CSI) being predicted and CSI not being predicted by a network model;
FIG. 3 is a flowchart of an information transmission method according to an embodiment of this application;
FIG. 4 is a schematic diagram of a transfer learning process;
FIG. 5 is a flowchart of another information transmission method according to an embodiment of this application;
FIG. 6 is a schematic structural diagram of an information transmission apparatus according to an embodiment of this application;
FIG. 7 is a schematic structural diagram of another information transmission apparatus according to an embodiment of this application;
FIG. 8 is a schematic structural diagram of a communication device according to an embodiment of this application;
FIG. 9 is a schematic diagram of a hardware structure of a terminal according to an embodiment of this application; and
FIG. 10 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communication system.

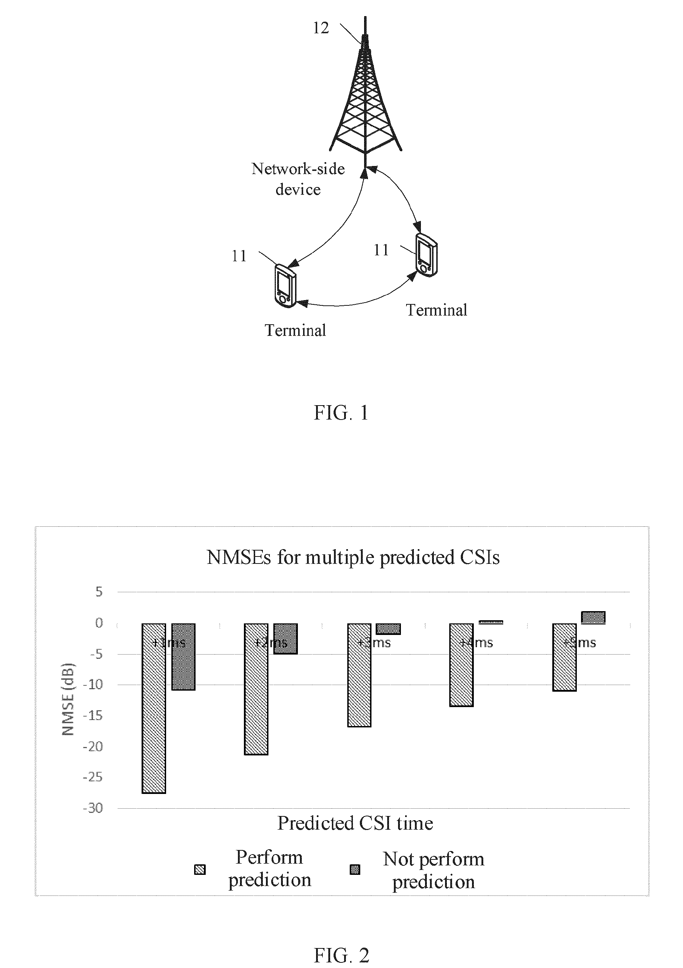

FIG. 1 illustrates a block diagram of a wireless communication system to which an embodiment of this application can be applied. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity Wi-Fi node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Artificial intelligence has been widely used in various fields at present. There are multiple implementations of AI models, such as neural networks, decision trees, support vector machines, and Bayesian classifiers. This application use a neural network as an example for description, but does not limit specific types of AI models.

Parameters of the neural network may be optimized by using an optimization algorithm. The optimization algorithm may be a type of algorithm capable of minimizing or maximizing an objective function (also referred to as a loss function). The objective function is usually a mathematical combination of model parameters and data. For example, data X and its corresponding label Y are given to construct a neural network model f(.). With this model, a predicted output f(x) is obtained based on the input x, and a difference (f(x)-Y) between the predicted value and the real value can be calculated, which is the loss function. The goal is to find appropriate weights and biases such that the value of the loss function reaches a minimum. A smaller loss value indicates that the model is closer to the real situation.

At present, the common optimization algorithms are basically based on the error back propagation (error Back Propagation, BP) algorithm. The basic idea of the BP algorithm is that a learning process includes two processes: forward propagation of signals and backward propagation of errors. In the forward propagation, input samples are transmitted from the input layer, processed layer by layer by each hidden layer, and then transmitted to the output layer. If an actual output of the output layer is not consistent with an expected output, it proceeds to the backward propagation stage of errors. Backward propagation of errors means that output errors are transmitted back to the input layer through the hidden layers layer by layer in a specific form, and the errors are distributed to all units of each layer, so as to obtain an error signal of each layer unit. The error signal is used as a basis for rectifying a weight of each unit. This process of adjusting the weight of each layer for forward propagation of signals and backward propagation of errors is performed repeatedly. The process of constantly adjusting weights is also the learning and training process of the network. This process continues until the errors of network outputs are reduced to an acceptable level, or until the preset number of learning times is reached.

Generally, depending on the type of problem being solved, the chosen AI algorithm and model may differ. As per currently published articles and publicly available research findings, one of the principal methods to enhance the performance of 5G networks through AI is to enhance or replace existing algorithms or processing modules by using algorithms and models based on neural networks. In specific scenarios, algorithms and models based on neural networks can perform better than those based on deterministic algorithms. Commonly used neural networks include deep neural networks, convolutional neural networks, and recurrent neural networks. With the help of existing AI tools, it is possible to build, train, and validate neural networks.

Replacing modules in communication systems with AI/machine learning (Machine Learning, ML) methods can effectively improve system performance. For example, AI network models can be used for CSI prediction, where historical CSI is input into the AI model, and the AI network model analyzes time-domain characteristics of the channel and outputs future CSI. As shown in FIG. 2, when using AI network model to predict CSI at different times in the future, its performance gain (such as normalized mean squared error (Normalized Mean Squared Error, NMSE)) is greatly improved compared with schemes that do not predict CSI. Furthermore, the achievable prediction accuracy varies depending on the future time points being predicted.

When AI network models are applied to wireless communication systems, the corresponding neural network needs to be run on the terminal. However, due to terminal mobility, wireless environment changes, and execution of different services, the model used on the terminal side needs to be adjusted, evolved, and updated accordingly.

In related technologies, retraining or updating the AI network model requires synchronizing the latest AI network model to both the terminal and the network-side device, which consumes a substantial amount of transmission resources of the terminal and the network-side device to transmit the latest AI network model.

However, in the embodiments of this application, as the terminal moves, the wireless environment changes, or different services are executed, when the AI network model on the terminal becomes mismatched with the current communication environment or services, transfer learning is applied to the AI network model. This involves updating part of network layers in the AI network model, and then synchronizing related parameters or description information of the updated network layers in the latest AI network model to the terminal and the network-side device, thereby reducing consumption of transmission resources required to synchronize and update the AI network model on the terminal and the network-side device.

The following specifically describes an information transmission method, an information transmission apparatus, and a communication device provided in the embodiments of this application through specific embodiments and application scenarios thereof with reference to the accompanying drawings.

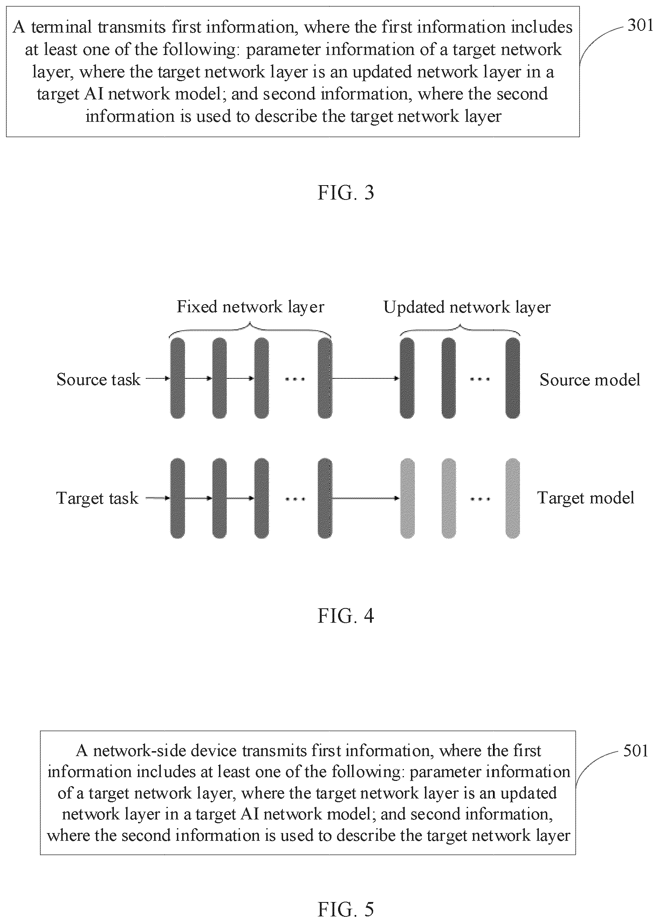

Referring to FIG. 3, FIG. 3 illustrates an information transmission method provided in an embodiment of this application, and the method is executed by a terminal. As shown in FIG. 3, the information transmission method executed by the terminal may include the following steps.

Step 301: The terminal transmits first information, where the first information includes at least one of the following:
parameter information of a target network layer, where the target network layer is an updated network layer in a target AI network model; and
second information, where the second information is used to describe the target network layer.

In an implementation, the target AI network model can be an AI network model such as a neural network, a decision tree, a support vector machine and a Bayesian classifier. This application uses a neural network as an example for description, but does not limit specific types of AI network models.

The target AI network model may have at least two network layers, such as input layer, output layer, and convolution layer, which is not exhaustive here.

In an implementation, the updated network layer in the target AI network model can be part of network layers in the AI network model updated through transfer learning, and in this case, the target network layer may be the updated part of the network layer in the target AI network model.

Transfer learning is described as follows:
Transfer learning is a small sample learning method that transfers a model trained on one task or dataset (commonly referred to as a pre-trained model) to a new task or scenario to achieve rapid training. In practice, most data from similar tasks or environments are correlated, so a model trained on an old task or dataset (referred to as a source domain) can be used as initial parameters in a new task or scenario (referred to as a target domain), thereby reducing training costs for the new task without having to start from scratch as with traditional neural network training methods.

Transfer learning can be divided into supervised transfer learning and unsupervised transfer learning. Supervised transfer learning is applicable when the source domain has sufficient labeled data, while the target domain has only a small amount of labeled data. Unsupervised transfer learning is applicable when the source domain has sufficient labeled data, and the target domain has sufficient unlabeled data. The embodiments of this application mainly relate to supervised transfer learning. As shown in FIG. 4, in the process of supervised transfer learning, a source AI network model can be trained in the source domain first, and then a target AI network model can be trained in the target domain. The source AI network model and the target AI network model use exactly a same structure, so that the target AI network model can be obtained by fine-tuning on the basis of the source AI network model. Typically, not all network layers of the source AI network model are fine-tuned, but part of the network layers are set as fixed layers without adjustment, and the rest is fine-tuned as adaptation layers. In this way, after part of network layers of the source AI network model are updated, the target AI network model can be obtained.

Transfer learning is a solution to address the issue of insufficient generalization capability of models. Generally, a model (referred to as a pre-trained model) is first trained using a large-scale dataset from scenario A or configuration A, and then this pre-trained model serves as an initial model for fine-tuning or retraining using data from scenario B or configuration B. During the fine-tuning and retraining phase, part of the pre-trained model (such as some layers of the neural network) can be selected for adjustment, while the other parts of the model remain unchanged. Generally, layers near the output end are adjusted. The number of layers to be adjusted depends on the data volume of scenario B or configuration B. A larger data volume indicates more layers to be adjusted.

In an implementation, the AI network model can be updated in other ways besides transfer learning, which is not specifically limited here.

Optionally, when all network layers of the AI network model are updated (such as by retraining the AI network model or updating all network layers of the AI network model in other ways), the target AI network layer may include all network layers of the AI network model.

In this way, in the process of synchronizing the AI network model, the transmit end and the receive end in the communication network can indicate which network layers of the AI network model have been updated, allowing the transmit end and the receive end to determine accordingly positions for updating the AI network model. The transmit end and the receive end in the communication network may be a terminal and/or a network-side device that implements the information transmission method described in the embodiments of this application, for example, the receive end is a terminal and the transmit end is a network-side device, or the receive end is a network-side device and the transmit end is a terminal.

In an implementation, the parameter information of the target network layer may be a parameter that can determine and/or constitute the target network layer, for example, the parameter information of the target network layer includes information such as structure parameters, weight parameters, and algorithms of the target network layer, which are not specifically limited here. That is, for the updated network layer, the terminal can transmit the network layer.

In an optional implementation, the second information includes at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

In an implementation, the second information includes a starting position of the updated network layer in the target AI network model, and may indicate the updated N1-th network layer and subsequent layers in the target AI network model, where N1 is a positive integer less than or equal to K, and K is the total number of network layers in the target AI network model.

In an implementation, the second information includes an ending position of the updated network layer in the target AI network model, and may indicate the updated N2-th network layer and preceding network layers in the target AI network model, where N2 is a positive integer less than or equal to K, and K is the total number of network layers in the target AI network model.

In an implementation, the second information includes a layer identifier set of the updated network layer in the target AI network model, which may be that the second information indicates layer identifiers of updated network layers. Optionally, the layer identifier may be the number or name or function of the network layer, which is not specifically limited here.

In an implementation, the second information includes a starting position set of the updated network layers in the target AI network model, meaning the updated network layers in the target AI network model may be several non-contiguous segments. In this case, the starting position set may include at least one of the identifier information such as the number, position, or name of the network layer corresponding to each segment's starting position. For example, updating network layers 1-3 and network layers 5-6 means the starting position set of the updated network layers in the target AI network model may include network layers 1 and 5.

Optionally, in a case that the second information includes the starting position set of the updated network layers in the target AI network model, the second information may further include the ending position set of the updated network layers in the target AI network model. For example, the starting position set of the updated network layers in the target AI network model may include network layers 1 and 5, while the ending position set of the updated network layers in the target AI network model may include network layers 3 and 6, so as to determine the target network layers to be network layers 1-3 and network layers 5-6.

Optionally, in a case that the second information includes the starting position set of updated network layers in the target AI network model, a protocol agreement or network-side indication can be used to stipulate X network layers after each starting position in the update starting position set, where X is a positive integer. For example, it is specified that X equal to 2 and the starting position set of the updated network layers in the target AI network model may include network layers 1 and 5, so as to determine the target network layers as network layers 1-2 and 5-6.

In an implementation, the second information includes an ending position set of the updated network layer in the target AI network model, which is similar to the foregoing embodiment in which the second information includes a starting position set of the updated network layers in the target AI network model, that is, the updated network layers in the target AI network model may be discontinuous segments; in this case, the ending position set may include at least one of identification information such as the number, position, and name of the network layer corresponding to an ending position of each segment. Similarly, in a case that the second information includes the ending position set of the updated network layers in the target AI network model, the second information may further include the starting position set of the updated network layers in the target AI network model, or it may be specified in advance that Y network layers before each ending position in the ending position set are updated, where Y is a positive integer.

In an implementation, the second information includes parameter information of the updated network layer in the target AI network model, and description information of the updated network layer in the target AI network model may be directly the corresponding network layer.

It should be noted that at least two items in the second information can be combined. For example, the second information may include the number of layers of the updated network layer in the target AI network model and the starting position of the updated network layer in the target AI network model. For example, if the second information indicates that there are five updated network layers in the target AI network model and the starting position is the 2nd network layer, it can be determined that the target network layer is network layers 2 to 6 in the target AI network model. For another example, the second information may include the number of layers of the updated network layer in the target AI network model and the ending position of the updated network layer in the target AI network model. For example, if the second information indicates that there are five updated network layers in the target AI network model and the starting position is the 8th network layer, it can be determined that the target network layer is network layers 4 to 8 in the target AI network model.

In an optional implementation, the first information includes parameter information of all network layers of the target AI network model in a case that the target AI network model is retrained.

In an optional implementation, the transmitting, by a terminal, first information includes:
receiving, by the terminal, first information from a network-side device, where the network-side device is a network-side device that updates the target AI network model.

In this embodiment, the network-side device updates the AI network model, and the terminal receives the first information from the network-side device, so that the terminal and the network-side device can synchronize the updated target AI network model.

Optionally, the method further includes:
updating, by the terminal, a first network layer in a first AI network model based on the first information to obtain the target AI network model, where the first network layer corresponds to the target network layer.

In an implementation, the first AI network model may be a pre-update AI network model possessed by the terminal. The first AI network model and the target AI network model may be AI network models of a same type and with a same function, and the difference between them is that the first AI network model is a pre-update AI network model possessed by the terminal, while the target AI network model is a post-update AI network model.

The correspondence between the first network layer and the target network layer can be understood as follows: the first network layer and the target network layer may be a same network layer; however, the first network layer is a network layer before the update and the target network layer is a network layer after the update. That is, the first network layer is a network layer in the first AI network model, and the target network layer is a network layer in the target AI network model. For example, the first network layer is the last two network layers in the first AI network model, and the target network layer is the last two network layers in the target AI network model.

For example, when the terminal moves or the communication environment in which the terminal is located changes, the source AI network model that the terminal has is no longer applicable. In this case, the network-side device performs transfer learning on the AI network model to update at least part of network layers in the AI network model, and sends the description information and/or parameters of the at least part of updated network layers to the terminal. The terminal may update corresponding network layers in the source AI network model based on the received information, and finally obtain the target AI network model, for example, the terminal replaces corresponding network layers in the source AI network model by using the at least part of updated network layers.

In an optional implementation, before the receiving, by the terminal, first information from a network-side device, the method further includes:
determining, by the terminal, a first network layer, where the first network layer is a layer that needs to be updated in a first AI network model; and
sending, by the terminal, third information to the network-side device, where the third information indicates that the terminal suggests updating the first network layer.

In an implementation, the network-side device can determine whether to adopt the suggestion of the terminal, and if so, the first network layer and the target network layer may be a same network layer before and after the update.

In an implementation, in a case that the network-side device updates the AI network model, the network-side device may receive the third information of the terminal and determine whether to adopt suggestion of the terminal.

Optionally, if the network-side device adopts the suggestion of the terminal, the network-side device performs transfer learning on a second network layer corresponding to a first network layer in a second AI network model to obtain a target AI network model, where the second AI network model is a pre-update AI network model possessed by the network-side device, and the second AI network model may be the same as the first AI network model. Similarly, the second network layer may be a network layer same as the target network layer, and the difference between them is that the second network layer is a network layer in the second AI network model, and the target network layer is a network layer in the target AI network model. That is, if the network-side device adopts the suggestion of the terminal, the target network layer includes the network layer corresponding to the first network layer in the target AI network model.

Optionally, if the network-side device does not adopt the suggestion of the terminal, the network-side device can determine by itself which network layer or layers to update in the second AI network model.

In this implementation, the terminal can suggest the network-side device according to its own needs to update a network layer that needs to be updated in the AI network model.

Optionally, after the terminal sends the third information to the network-side device, the method further includes:
receiving, by the terminal, fourth information from the network-side device, where the fourth information indicates that the network-side device agrees or disagrees to update the first network layer of the first AI network model; where
in a case that the fourth information indicates that the network-side device agrees to update the first network layer of the first AI network model, the target network layer includes a network layer corresponding to the first network layer in the target AI network model.

It should be noted that the indication in this embodiment of this application may be an explicit indication, for example, the sent information explicitly indicates the fourth information, or the indication in the embodiment of this application may be an implicit indication, for example, the second information is included in the first information, and when the target network layer described by the second information does not correspond to the first network layer, the second information can be used as the fourth information, and the fourth information indicates that the network-side device disagrees to update the first AI network model.

Optionally, in a case that the fourth information indicates that the network-side device agrees to update the first network layer of the first AI network model, the first information includes the parameter information of the target network layer and does not include the second information, that is, the parameter information of the target network layer sent by the network-side device is post-update parameter information of the first network layer that the terminal suggests updating.

In this way, omitting transmission of the second information can reduce resource consumption for transmitting the first information.

Optionally, in a case that the fourth information indicates that the network-side device disagrees to update the first network layer of the first AI network model, the first information includes parameter information of the target network layer and the second information, and in this case, the target network layer described by the second information does not correspond to the first network layer.

In this way, through transmission of the second information, the terminal can be notified which network layer or layers are the target network layer to be finally updated.

In another optional implementation, the transmitting, by a terminal, first information includes:
in a case that the terminal updates the target AI network model, sending, by the terminal, the first information to the network-side device.

In this embodiment, the terminal updates the AI network model, and after updating to obtain the target AI network model, the terminal sends the first information to the network-side device, so that the terminal and the network-side device can synchronize the updated target AI network model.

In an optional implementation, before the sending, by the terminal, the first information to the network-side device, the method further includes:
receiving, by the terminal, fifth information from the network-side device, where the fifth information is used to indicate a first network layer, and the first network layer is a pre-update network layer corresponding to the target network layer.

In this implementation, before the terminal performs transfer learning on the AI network model, the network-side device indicates the terminal to update which network layer or layers, so that the terminal updates the network layer indicated by the network-side device to obtain the target network side.

It should be noted that in a case that the terminal receives fifth information from the network-side device, the first information may not include the second information, that is, the first information merely needs to include the parameter information of the target network layer.

In an optional implementation, before the sending, by the terminal, the first information to the network-side device, the method further includes:
determining, by the terminal, a first network layer; and
updating, by the terminal, the first network layer of the first AI network model to obtain the target AI network model, where the first network layer corresponds to the target network layer.

In this implementation, before the terminal performs transfer learning on the AI network model, the terminal determines by itself which network layer or network layers to update.

In an optional implementation, after the terminal determines the first network layer, the method further includes:
sending, by the terminal, sixth information to the network-side device, where the sixth information is used for requesting to update the first network layer; and
receiving, by the terminal, seventh information from the network-side device, where the seventh information indicates whether updating the first network layer is allowed; where
the updating, by the terminal, the first network layer of the first AI network model to obtain the target AI network model includes:
   in a case that the seventh information indicates that updating the first network layer is allowed, updating, by the terminal, the first network layer of the first AI network model to obtain the target AI network model.

In an implementation, if the seventh information indicates that updating the first network layer is not allowed, the terminal does not update the first network layer of the first AI network model, for example, the terminal stops the transfer learning process of the first AI network model, or the terminal reselects a network layer that needs to be updated in the first AI network model, and requests the network-side device again to update the reselected network layer, or the terminal waits for an indication of the network-side device to determine a network layer that needs to be updated, which is not specifically limited here.

In this implementation, after determining which network layer or layers to update, the terminal also requests the network-side device to update the network layer, and only when the network-side device agrees to update the network layer, the process of updating the first network layer of the first AI network model is executed.

In the embodiments of this application, the terminal transmits first information, where the first information includes at least one of the following: parameter information of a target network layer, where the target network layer is an updated network layer in a target AI network model; and second information, where the second information is used to describe the target network layer. This allows the terminal to transmit only the updated network layers of the AI network model during the process of transfer learning on the AI network model to update the AI network model. Compared to transmitting the entire updated AI network model, this significantly reduces consumption of transmission resources, thereby increasing transmission resources available for the terminal to transmit other information.

As shown in FIG. 5, FIG. 5 illustrates an information transmission method provided in an embodiment of this application, and the method is executed by a network-side device. As shown in FIG. 5, the information transmission method may include the following steps.

Step 501: A network-side device transmits first information, where the first information includes at least one of the following:
parameter information of a target network layer, where the target network layer is an updated network layer in a target AI network model; and
second information, where the second information is used to describe the target network layer.

The meanings and functions of the first information, the target network layer, the parameter information of the target network layer, and the second information in this embodiment of this application are the same as the first information, the target network layer, the parameter information of the target network layer, and the second information in the method embodiment shown in FIG. 3, which are not specifically limited here.

The information transmission method in this embodiment corresponds to the method embodiment shown in FIG. 3. The difference lies in that the information transmission method in this embodiment is for a network-side device and the execution subject of the method embodiment shown in FIG. 3 is a terminal. For the description of the information transmission method in this embodiment, refer to related descriptions in the method embodiment shown in FIG. 3, and details are not repeated here. In addition, the terminal and the network-side device are mutually configured, for example, the network-side device sends the first information to the terminal, or the terminal sends the first information to the network-side device, so as to jointly implement transmission the updated network layer in the AI network model when transfer learning is performed on the AI network model to update the AI network model. This can increase transmission resources available for the terminal and the network-side device to transmit other information.

In an optional implementation, the second information includes at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

In an optional implementation, the first information includes parameter information of all network layers of the target AI network model in a case that the target AI network model is retrained.

In an optional implementation, the transmitting, by a network-side device, first information includes:
in a case that the network-side device updates the target AI network model, sending, by the network-side device, the first information to a terminal.

In an optional implementation, the transmitting, by a network-side device, first information includes:
receiving, by the network-side device, first information from a terminal, where the terminal is a terminal that updates the target AI network model.

In an optional implementation, the method further includes:
updating, by the network-side device, a second network layer in a second AI network model based on the first information to obtain the target AI network model, where the second network layer corresponds to the target network layer.

The second AI network model has the same meaning as the pre-update AI network model that the network-side device has in the method embodiment shown in FIG. 3, and the second network layer has the same meaning as the network layer to be updated in the second AI network model in the method embodiment shown in FIG. 3.

In an optional implementation, before the network-side device sends the first information to the terminal, the method further includes:
receiving, by the network-side device, third information from the terminal, where the third information indicates that the terminal suggests updating a first network layer, and the first network layer is a to-be-updated layer in a first AI network model owned by the terminal; and
determining, by the network-side device, the target network layer based on the first network layer.

In an implementation, that the network-side device determines the target network layer based on the first network layer may include that the network-side device adopts the suggestion of the terminal and determines to update the first network layer, that is, determining that the target network layer is a network layer corresponding to the first network layer in the target AI network model.

In an implementation, that the network-side device determines the target network layer based on the first network layer may include that the network-side device does not adopt the suggestion of the terminal and determines by itself which network layer or layers to update, that is, determining that the target network layer is a network layer corresponding to a network layer, required as determined by the network-side device, in the target AI network model.

In an optional implementation, after the network-side device receives the third information from the terminal, the method further includes:
sending, by the network-side device, fourth information to the terminal, where the fourth information indicates that the network-side device agrees or disagrees to update the first network layer of the first AI network model; and
in a case that the fourth information indicates that the network-side device agrees to update the first network layer of the first AI network model, the target network layer includes a network layer corresponding to the first network layer in the target AI network model.

In an optional implementation, in a case that the fourth information indicates that the network-side device disagrees to update the first network layer of the first AI network model, the method further includes:
determining, by the network-side device, a second network layer that needs to be updated in a second AI network model, where the second network layer corresponds to the target network layer.

In an optional implementation, in a case that the fourth information indicates that the network-side device disagrees to update the first network layer of the first AI network model, the first information includes parameter information of the target network layer and the second information;
and/or
in a case that the fourth information indicates that the network-side device agrees to update the first network layer of the first AI network model, the first information includes parameter information of the target network layer.

In an optional implementation, before the network-side device receives the first information from the terminal, the method further includes:
sending, by the network-side device, fifth information to the terminal, where the fifth information is used to indicate a first network layer, and the first network layer is a pre-update network layer corresponding to the target network layer.

In an optional implementation, before the network-side device receives the first information from the terminal, the method further includes:
receiving, by the network-side device, sixth information from the terminal, where the sixth information is used for requesting to update a first network layer, and the first network layer is a to-be-updated layer in a first AI network model owned by the terminal; and
sending, by the network-side device, seventh information to the terminal, where the seventh information indicates whether updating the first network layer is allowed.

The information transmission method provided in this embodiment of this application corresponds to the information transmission method in the implementation shown in FIG. 3, so as to jointly implement transmission the updated network layer in the AI network model when transfer learning is performed on the AI network model to update the AI network model. This can increase transmission resources available for the terminal and the network-side device to transmit other information.

For the information transmission method provided in this embodiment of this application, the execution subject may be an information transmission apparatus. In the embodiments of this application, the information transmission apparatus provided in the embodiments of this application is described by using the information transmission method being executed by the information transmission apparatus as an example.

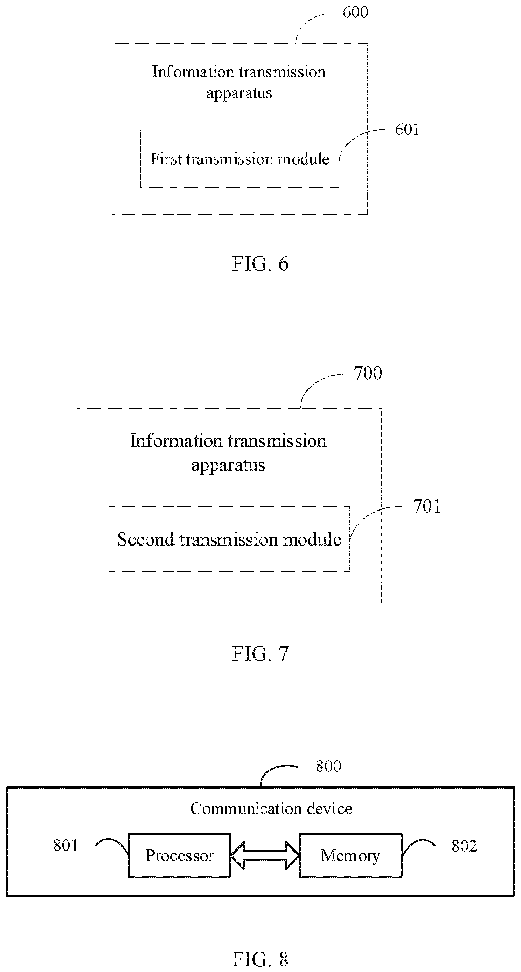

Refer to FIG. 6. An information transmission apparatus provided in an embodiment of this application may be an apparatus in a terminal. As shown in FIG. 6, the information transmission apparatus 600 may include the following modules:
a first transmission module 601, configured to transmit first information, where the first information includes at least one of the following:
parameter information of a target network layer, where the target network layer is an updated network layer in a target AI network model; and
second information, where the second information is used to describe the target network layer.

Optionally, the second information includes at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

Optionally, the first information includes parameter information of all network layers of the target AI network model in a case that the target AI network model is retrained.

Optionally, the first transmission module 601 is specifically configured to:
receive first information from a network-side device, where the network-side device is a network-side device that updates the target AI network model.

Optionally, the information transmission apparatus 600 further includes:
a first updating module, configured to update a first network layer in a first AI network model based on the first information to obtain the target AI network model, where the first network layer corresponds to the target network layer.

Optionally, the first transmission module 601 is specifically configured to:
in a case that the terminal updates the target AI network model, send the first information to the network-side device.

Optionally, the information transmission apparatus 600 further includes:
a first determining module, configured to determine a first network layer, where the first network layer is a layer that needs to be updated in a first AI network model; and
a first sending module, configured to send third information to the network-side device, where the third information indicates that the terminal suggests updating the first network layer.

Optionally, the information transmission apparatus 600 further includes:
a first receiving module, configured to receive fourth information from the network-side device, where the fourth information indicates that the network-side device agrees or disagrees to update the first network layer of the first AI network model; where
in a case that the fourth information indicates that the network-side device agrees to update the first network layer of the first AI network model, the target network layer includes a network layer corresponding to the first network layer in the target AI network model.

Optionally, in a case that the fourth information indicates that the network-side device disagrees to update the first network layer of the first AI network model, the first information includes parameter information of the target network layer and the second information; and/or
in a case that the fourth information indicates that the network-side device agrees to update the first network layer of the first AI network model, the first information includes parameter information of the target network layer.

Optionally, the information transmission apparatus 600 further includes:
a second receiving module, configured to receive fifth information from the network-side device, where the fifth information is used to indicate a first network layer, and the first network layer is a before-updating network layer corresponding to the target network layer.

Optionally, the information transmission apparatus 600 further includes:
a second determining module, configured to determine a first network layer; and
a second updating module, configured to update the first network layer of the first AI network model to obtain the target AI network model, where the first network layer corresponds to the target network layer.

Optionally, the information transmission apparatus 600 further includes:
a second sending module, configured to send sixth information to the network-side device, where the sixth information is used for requesting to update the first network layer; and
a third receiving module, configured to receive seventh information from the network-side device, where the seventh information indicates whether updating the first network layer is allowed; where
the second updating module is specifically configured to:
   in a case that the seventh information indicates that updating the first network layer is allowed, update the first network layer of the first AI network model to obtain the target AI network model.

The information transmission apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The information transmission apparatus 600 provided in this embodiment of this application is capable of implementing the processes implemented by the terminal in the method embodiment shown in FIG. 3, with the same beneficial effects achieved. To avoid repetition, details are not described herein again.

Refer to FIG. 7. An information transmission apparatus provided in an embodiment of this application may be an apparatus in a network-side device. As shown in FIG. 7, the information transmission apparatus 700 may include the following modules:
a second transmission module 701, configured to transmit first information, where the first information includes at least one of the following:
parameter information of a target network layer, where the target network layer is an updated network layer in a target AI network model; and
second information, where the second information is used to describe the target network layer.

Optionally, the second information includes at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

Optionally, the first information includes parameter information of all network layers of the target AI network model in a case that the target AI network model is retrained.

Optionally, the second transmission module 701 is specifically configured to:
in a case that the network-side device updates the target AI network model, send the first information to a terminal.

Optionally, the second transmission module 701 is specifically configured to:
receive first information from a terminal, where the terminal is a terminal that updates the target AI network model.

Optionally, the information transmission apparatus 700 further includes:
a third updating module, configured to update a second network layer in a second AI network model based on the first information to obtain the target AI network model, where the second network layer corresponds to the target network layer.

Optionally, the information transmission apparatus 700 further includes:
a fourth receiving module, configured to receive third information from the terminal, where the third information indicates that the terminal suggests updating a first network layer, and the first network layer is a to-be-updated layer in a first AI network model owned by the terminal; and
a third determining module, configured to determine the target network layer based on the first network layer.

Optionally, the information transmission apparatus 700 further includes:
a third sending module, configured to send fourth information to the terminal, where the fourth information indicates that the network-side device agrees or disagrees to update the first network layer of the first AI network model; and
in a case that the fourth information indicates that the network-side device agrees to update the first network layer of the first AI network model, the target network layer includes a network layer corresponding to the first network layer in the target AI network model.

Optionally, in a case that the fourth information indicates that the network-side device disagrees to update the first network layer of the first AI network model, the information transmission apparatus 700 further includes:
a fourth determining module, configured to determine a second network layer that needs to be updated in a second AI network model, where the second network layer corresponds to the target network layer.

Optionally, in a case that the fourth information indicates that the network-side device disagrees to update the first network layer of the first AI network model, the first information includes parameter information of the target network layer and the second information;
and/or
in a case that the fourth information indicates that the network-side device agrees to update the first network layer of the first AI network model, the first information includes parameter information of the target network layer.

Optionally, the information transmission apparatus 700 further includes:
a fourth sending module, configured to send fifth information to the terminal, where the fifth information is used to indicate a first network layer, and the first network layer is a before-updating network layer corresponding to the target network layer.

Optionally, the information transmission apparatus 700 further includes:
a fifth receiving module, configured to receive sixth information from the terminal, where the sixth information is used for requesting to update a first network layer, and the first network layer is a to-be-updated layer in a first AI network model owned by the terminal; and
a fifth sending module, configured to send seventh information to the terminal, where the seventh information indicates whether updating the first network layer is allowed.

The information transmission apparatus 700 provided in this embodiment of this application is capable of implementing the processes implemented by the network-side device in the method embodiment shown in FIG. 5, with the same beneficial effects achieved. To avoid repetition, details are not described herein again.

Optionally, as shown in FIG. 8, an embodiment of this application further provides a communication device 800, including a processor 801 and a memory 802. A program or instructions capable of running on the processor 801 are stored in the memory 802. For example, when the communication device 800 is a terminal and when the program or the instructions are executed by the processor 801, the steps of the foregoing embodiments of the method shown in FIG. 3 are implemented, with the same technical effects achieved. When the communication device 800 is a network-side device, and the program or instructions are executed by the processor 801, the steps of the foregoing embodiments of the method shown in FIG. 5 are implemented, with the same technical effects achieved. To avoid repetition, details are not described herein again.

An embodiment of this application further provides a terminal, including a processor and a communication interface, where the communication interface is configured to transmit first information, where the first information includes at least one of the following:
parameter information of a target network layer, where the target network layer is an updated network layer in a target AI network model; and
second information, where the second information is used to describe the target network layer.

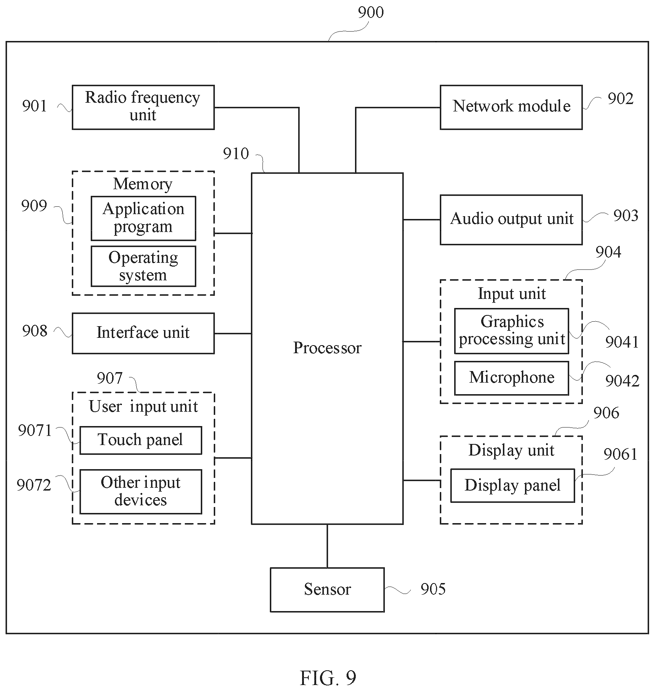

The embodiment of the terminal can implement the processes executed by the information transmission apparatus 600 shown in FIG. 6, with the same technical effects achieved. Details are not described herein again. Specifically, FIG. 9 is a schematic diagram of a hardware structure of a terminal implementing an embodiment of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 901 sends the downlink data to the processor 910 for processing; and the radio frequency unit 901 also sends uplink data to the network-side device. Generally, the radio frequency unit 901 includes, but is not limited to, an antenna, an amplifier, a transceiver, a coupler, a low noise amplifier, a duplexer, and the like.

The memory 909 may be configured to store software programs or instructions and various data. The memory 909 may mainly include a first storage area for storing programs or instructions and a second storage area for storing data, where the first storage area may store an operating system, an application program or instructions required by at least one function (for example, an audio playing function and an image playing function), and the like. In addition, the memory 909 may be a volatile memory or a non-volatile memory, or the memory 909 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 909 described in this embodiment this application includes but is not limited to these and any other suitable types of memories.

The processor 910 may include one or more processing units. Optionally, the processor 910 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 910.

The radio frequency unit 901 is configured to transmit first information, where the first information includes at least one of the following:
parameter information of a target network layer, where the target network layer is an updated network layer in a target AI network model; and
second information, where the second information is used to describe the target network layer.

Optionally, the second information includes at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

Optionally, the first information includes parameter information of all network layers of the target AI network model in a case that the target AI network model is retrained.

Optionally, the transmitting the first information performed by the radio frequency unit 901 includes:
receive first information from a network-side device, where the network-side device is a network-side device that updates the target AI network model.

Optionally, the processor 910 is configured to update a first network layer in a first AI network model based on the first information to obtain the target AI network model, where the first network layer corresponds to the target network layer.

Optionally, the transmitting the first information performed by the radio frequency unit 901 includes:
in a case that the terminal updates the target AI network model, send the first information to the network-side device.

Optionally, before the radio frequency unit 901 performs the receiving of the first information from the network-side device:
the processor 910 is further configured to determine a first network layer, where the first network layer is a layer that needs to be updated in the first AI network model; and
the radio frequency unit 901 is further configured to send third information to the network-side device, where the third information indicates that the terminal suggests updating the first network layer.

Optionally, after executing the sending of the third information to the network-side device, the radio frequency unit 901 is further configured to receive fourth information from the network-side device, where the fourth information indicates that the network-side device agrees or disagrees to update the first network layer of the first AI network model;
in a case that the fourth information indicates that the network-side device agrees to update the first network layer of the first AI network model, the target network layer includes a network layer corresponding to the first network layer in the target AI network model.

Optionally, in a case that the fourth information indicates that the network-side device disagrees to update the first network layer of the first AI network model, the first information includes parameter information of the target network layer and the second information; and/or
in a case that the fourth information indicates that the network-side device agrees to update the first network layer of the first AI network model, the first information includes parameter information of the target network layer.

Optionally, before executing the sending of the first information to the network-side device, the radio frequency unit 901 is further configured to receive fifth information from the network-side device, where the fifth information is used to indicate a first network layer, and the first network layer is a pre-update network layer corresponding to the target network layer.

Optionally, before the radio frequency unit 901 executes the sending of the first information to the network-side device:
the processor 910 is further configured to determine a first network layer; and
the processor 910 is further configured to update the first network layer of the first AI network model to obtain the target AI network model, where the first network layer corresponds to the target network layer.

Optionally, after the processor 910 executes the determining of the first network layer:
the radio frequency unit 901 is further configured to send sixth information to the network-side device, where the sixth information is used for requesting to update the first network layer; and
the radio frequency unit 901 is further configured to receive seventh information from the network-side device, where the seventh information indicates whether updating the first network layer is allowed.

The updating of the first network layer of the first AI network model by the processor 910 to obtain the target AI network model includes:
in a case that the seventh information indicates that updating the first network layer is allowed, update the first network layer of the first AI network model to obtain the target AI network model.

The terminal 900 provided in this embodiment of this application can implement the processes executed by the information transmission apparatus 600 shown in FIG. 6, with the same beneficial effects achieved. To avoid repetition, details are not described herein again.

An embodiment of this application further provides a network-side device, including a processor and a communication interface, where the communication interface is configured to transmit first information, where the first information includes at least one of the following:
parameter information of a target network layer, where the target network layer is an updated network layer in a target AI network model; and
second information, where the second information is used to describe the target network layer.

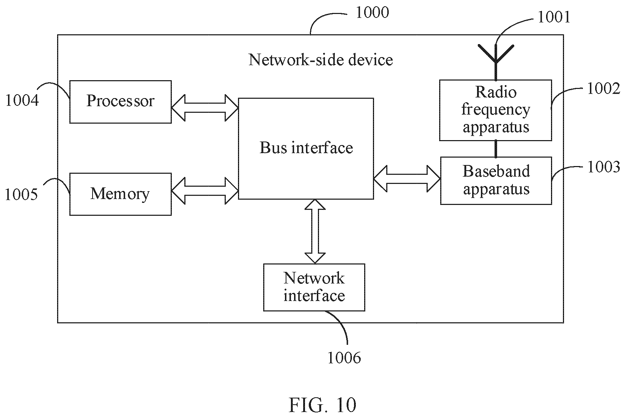

The embodiment of the network-side device can implement the processes executed by the information transmission apparatus 700 shown in FIG. 7, with the same technical effects achieved. Details are not described herein again. Specifically, an embodiment of this application further provides a network-side device. As shown in FIG. 10, the network-side device 1000 includes an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information by using the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out by using the antenna 1001.

The method performed by the network-side device in the foregoing embodiment may be implemented in the baseband apparatus 1003, and the baseband apparatus 1003 includes a baseband processor.

The baseband apparatus 1003 may include, for example, at least one baseband processing unit, where a plurality of chips are disposed on the baseband processing unit. As shown in FIG. 8, one of the chips is, for example, the baseband processor, and connected to the memory 1005 through a bus interface, to invoke the program in the memory 1005 to perform the operations of the network device shown in the foregoing method embodiment.

The network-side device may further include a network interface 1006, where the interface is, for example, a common public radio interface (Common Public Radio Interface, CPRI).

Specifically, the network-side device 1000 according to this embodiment of this application further includes instructions or programs stored in the memory 1005 and capable of running on the processor 1004, and the processor 1004 calls the instructions or programs in the memory 1005 to execute the methods performed by the modules shown in FIG. 7, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the method shown in FIG. 3 or FIG. 5 may be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface, the communication interface is coupled to the processor, and the processor is configured to run a program or instructions, so as to implement the processes of the method embodiment shown in FIG. 3 or FIG. 5, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes shown in FIG. 3 or FIG. 5 and the foregoing method embodiments, with the same technical effects achieved. To avoid repetition, details are not repeated herein.

An embodiment of this application further provides a communication system, including a terminal and a network-side device, where the terminal can be configured to execute the steps of the information transmission method shown in FIG. 3, and the network-side device can be configured to execute the steps of the information transmission method shown in FIG. 5.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. An information transmission method, comprising:
transmitting, by a terminal, first information, wherein the first information comprises at least one of the following:
parameter information of a target network layer, wherein the target network layer is an updated network layer in a target AI network model; and
second information, wherein the second information is used to describe the target network layer.

2. The method according to claim 1, wherein the second information comprises at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

3. The method according to claim 1, wherein the first information comprises parameter information of all network layers of the target AI network model in a case that the target AI network model is retrained.

4. The method according to any one of claims 1 to 3, wherein the transmitting, by a terminal, first information comprises:
receiving, by the terminal, first information from a network-side device, wherein the network-side device is a network-side device that updates the target AI network model.

5. The method according to claim 4, wherein the method further comprises:
updating, by the terminal, a first network layer in a first AI network model based on the first information to obtain the target AI network model, wherein the first network layer corresponds to the target network layer.

6. The method according to any one of claims 1 to 3, wherein the transmitting, by a terminal, first information comprises:
in a case that the terminal updates the target AI network model, sending, by the terminal, the first information to the network-side device.

7. The method according to claim 4, wherein before the receiving, by the terminal, first information from a network-side device, the method further comprises:
determining, by the terminal, a first network layer, wherein the first network layer is a layer that needs to be updated in a first AI network model; and
sending, by the terminal, third information to the network-side device, wherein the third information indicates that the terminal suggests updating the first network layer.

8. The method according to claim 7, wherein after the sending, by the terminal, third information to the network-side device, the method further comprises:
receiving, by the terminal, fourth information from the network-side device, wherein the fourth information indicates that the network-side device agrees or disagrees to update the first network layer of the first AI network model; wherein
in a case that the fourth information indicates that the network-side device agrees to update the first network layer of the first AI network model, the target network layer comprises a network layer corresponding to the first network layer in the target AI network model.

9. The method according to claim 8, wherein in a case that the fourth information indicates that the network-side device disagrees to update the first network layer of the first AI network model, the first information comprises parameter information of the target network layer and the second information; and/or
in a case that the fourth information indicates that the network-side device agrees to update the first network layer of the first AI network model, the first information comprises parameter information of the target network layer.

10. The method according to claim 6, wherein before the sending, by the terminal, the first information to the network-side device, the method further comprises:
receiving, by the terminal, fifth information from the network-side device, wherein the fifth information is used to indicate a first network layer, and the first network layer is a pre-update network layer corresponding to the target network layer.

11. The method according to claim 6, wherein before the sending, by the terminal, the first information to the network-side device, the method further comprises:
determining, by the terminal, a first network layer; and
updating, by the terminal, the first network layer of the first AI network model to obtain the target AI network model, wherein the first network layer corresponds to the target network layer.

12. The method according to claim 11, wherein after the determining, by the terminal, a first network layer, the method further comprises:
sending, by the terminal, sixth information to the network-side device, wherein the sixth information is used for requesting to update the first network layer; and
receiving, by the terminal, seventh information from the network-side device, wherein the seventh information indicates whether updating the first network layer is allowed; wherein
the updating, by the terminal, the first network layer of the first AI network model to obtain the target AI network model comprises:
in a case that the seventh information indicates that updating the first network layer is allowed, updating, by the terminal, the first network layer of the first AI network model to obtain the target AI network model.

13. An information transmission method, comprising:
transmitting, by a network-side device, first information, wherein the first information comprises at least one of the following:
parameter information of a target network layer, wherein the target network layer is an updated network layer in a target AI network model; and
second information, wherein the second information is used to describe the target network layer.

14. The method according to claim 13, wherein the second information comprises at least one of the following:
the number of layers of the updated network layer in the target AI network model;
a starting position of the updated network layer in the target AI network model;
an ending position of the updated network layer in the target AI network model;
a layer identifier set of the updated network layer in the target AI network model;
a starting position set of the updated network layer in the target AI network model;
an ending position set of the updated network layer in the target AI network model; and
parameter information of the updated network layer in the target AI network model.

15. The method according to claim 13, wherein the first information comprises parameter information of all network layers of the target AI network model in a case that the target AI network model is retrained.

16. The method according to any one of claims 13 to 15, wherein the transmitting, by a network-side device, first information comprises:
in a case that the network-side device updates the target AI network model, sending, by the network-side device, the first information to a terminal.

17. The method according to any one of claims 13 to 15, wherein the transmitting, by a network-side device, first information comprises:
receiving, by the network-side device, first information from a terminal, wherein the terminal is a terminal that updates the target AI network model.

18. The method according to claim 17, wherein the method further comprises:
updating, by the network-side device, a second network layer in a second AI network model based on the first information to obtain the target AI network model, wherein the second network layer corresponds to the target network layer.

19. The method according to claim 16, wherein before the sending, by the network-side device, the first information to a terminal, the method further comprises:
receiving, by the network-side device, third information from the terminal, wherein the third information indicates that the terminal suggests updating a first network layer, and the first network layer is a to-be-updated layer in a first AI network model owned by the terminal; and
determining, by the network-side device, the target network layer based on the first network layer.

20. The method according to claim 19, wherein after the receiving, by the network-side device, third information from the terminal, the method further comprises:
sending, by the network-side device, fourth information to the terminal, wherein the fourth information indicates that the network-side device agrees or disagrees to update the first network layer of the first AI network model; and
in a case that the fourth information indicates that the network-side device agrees to update the first network layer of the first AI network model, the target network layer comprises a network layer corresponding to the first network layer in the target AI network model.

21. The method according to claim 20, wherein in a case that the fourth information indicates that the network-side device disagrees to update the first network layer of the first AI network model, the method further comprises:
determining, by the network-side device, a second network layer that needs to be updated in a second AI network model, wherein the second network layer corresponds to the target network layer.

22. The method according to claim 21, wherein, in a case that the fourth information indicates that the network-side device disagrees to update the first network layer of the first AI network model, the first information comprises parameter information of the target network layer and the second information;
and/or
in a case that the fourth information indicates that the network-side device agrees to update the first network layer of the first AI network model, the first information comprises parameter information of the target network layer.

23. The method according to claim 17, wherein before the receiving, by the network-side device, first information from a terminal, the method further comprises:
sending, by the network-side device, fifth information to the terminal, wherein the fifth information is used to indicate a first network layer, and the first network layer is a pre-update network layer corresponding to the target network layer.

24. The method according to claim 17, wherein before the receiving, by the network-side device, first information from a terminal, the method further comprises:
receiving, by the network-side device, sixth information from the terminal, wherein the sixth information is used for requesting to update a first network layer, and the first network layer is a to-be-updated layer in a first AI network model owned by the terminal; and
sending, by the network-side device, seventh information to the terminal, wherein the seventh information indicates whether updating the first network layer is allowed.

25. An information transmission apparatus, applied to a terminal, wherein the apparatus comprises:
a first transmission module, configured to transmit first information, wherein the first information comprises at least one of the following:
parameter information of a target network layer, wherein the target network layer is an updated network layer in a target AI network model; and
second information, wherein the second information is used to describe the target network layer.

26. An information transmission apparatus, applied to a network-side device, wherein the apparatus comprises:
a second transmission module, configured to transmit first information, wherein the first information comprises at least one of the following:
parameter information of a target network layer, wherein the target network layer is an updated network layer in a target AI network model; and
second information, wherein the second information is used to describe the target network layer.

27. A communication device, comprising a processor and a memory, wherein the memory stores a program or instructions capable of running on the processor, and when the program or instructions are executed by the processor, the steps of the information transmission method according to any one of claims 1 to 24 are implemented.

28. A readable storage medium, wherein a program or instructions are stored on the readable storage medium, and when the program or the instructions are executed by a processor, the steps of the information transmission method according to any one of claims 1 to 24 are implemented.
